(19) Europäisches Patentamt
European Patent Office
Office européen des brevets

(11) EP 4 517 256 A1

(12) **EUROPEAN PATENT APPLICATION**

(43) Date of publication:
05.03.2025 Bulletin 2025/10

(21) Application number: 24197740.4

(22) Date of filing: 30.08.2024

(51) International Patent Classification (IPC):
*G01B 11/25* (2006.01)

(52) Cooperative Patent Classification (CPC):
G01B 11/2513; G01B 11/2545

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.09.2023 US 202363580020 P

(71) Applicant: Spirit AeroSystems, Inc.
Wichita, KS 67210 (US)

(72) Inventors:
• HAYNES, Mark
Wichita, 67210 (US)
• CORK, Glen Paul
Wichita, 67210 (US)
• MCKENNA, Matthew William
Wichita, 67210 (US)

(74) Representative: HGF
HGF Limited
1 City Walk
Leeds LS11 9DX (GB)

(54) **TOPOGRAPHICAL INSPECTION**

(57) Disclosed are devices and methods for topographical inspection. A topographical inspection device employs one or both of (1) a photometric stereo system configured for determining surface normal for individual pixel locations in an image space and/or (2) a combination of photometric stereo and dot pattern projection. A computer-implemented method of determining a topography of an inspection region of a surface includes sequentially illuminating the inspection region using individual photometric stereo light elements at spaced apart light source locations, and capturing an image of the inspection region. A response surface is fitted to pixel intensities of the images, and used to calculate a surface normal vector, from which a surface topography measurement is obtained.

*Fig. 1*

EP 4 517 256 A1

## Description

FIELD

The present disclosure pertains to devices and methods for topographical inspection. More particularly, the present disclosure pertains to a topographical inspection device that employs one or both of (1) a photometric stereo system configured for determining surface normal for individual pixel locations in an image space and/or (2) a combination of photometric stereo and dot pattern projection.

BACKGROUND

Topographical inspection is used to ensure that structures are manufactured to specification. In aerospace manufacturing and other high performance manufacturing industries, topographical inspection is used to detect very small surface discontinuities to determine whether a surface of the manufactured structure meets the extremely tight manufacturing tolerances allowed under the specification. A state of the art topographical inspection tool is disclosed in U.S. Patent No. 10,837,916, assigned to the assignee of the present disclosure. The inspection tool of the '916 patent comprises a handheld housing containing a plurality of lights and a camera. At a distal end, the housing supports a transparent gel pack in front of the camera. The gel pack must be pressed against the surface with sufficient force to conform to the surface. The gel pack makes the reflectance of the surface more uniform, e.g., by reducing glare. This makes the images captured by the camera more accurate, so they can be used more effectively for determining the geometry of features of the surface (e.g., the depth of a discontinuity) in the image.

SUMMARY OF THE INVENTION

Aspects and embodiments of the inventions are set out in the following numbered clauses:

Clause 1: A topographical inspection device comprising:

a device body;
a plurality of photometric stereo light elements at spaced apart light source locations, each of the photometric stereo light elements configured for illuminating an inspection region of a surface;
a dot pattern projector mounted on the device body for projecting a dot pattern onto the inspection region of the surface;
an camera for capturing images of the inspection region of the surface; and
a controller configured to control the photometric stereo light elements and the camera for making a first topographical measurement of the inspection region and to control the dot pattern projector and the camera for making a second topographical measurement of the inspection region.

Clause 2. The topographical inspection device of clause 1, wherein the topographical inspection device is configured for making the first and second topographical measurements without compressing a conforming element onto the inspection region.

Clause 3. The topographical inspection device of clause 1 or 2, wherein the controller is configured to use the second topographical measurement to correct wave form distortion in the first topographical measurement.

Clause 4. The topographical inspection device of any preceding clause, wherein each of the images captured by the camera includes a plurality of pixels and each of the pixels has a respective pixel location along the inspection region, wherein the controller is configured to make the first topographical measurement by calculating a surface normal vector for each pixel location based solely on light intensity in pixels of the images at the respective pixel location.

Clause 5. The topographical inspection device of clause 4, wherein before calculating the surface normal vector for each pixel location, the controller is configured to determine a response surface for each pixel location notionally representing intensity of light reflected at the respective pixel location in relation to light source location.

Clause 6. The topographical inspection device of clause 4 or 5, wherein the controller is further configured to determine a response surface maximum for each response surface, the response surface maximum notionally representing the light source location where the intensity of light reflected by the inspection region at the respective pixel location is greatest.

Clause 7. The topographical inspection device of clause 6, wherein the controller is configured to determine the response surface for each pixel location by:

conducting a photometric stereo routine in which the controller sequentially directs each of the photometric stereo light elements to individually illuminate the inspection region from the respective light source location and directs the camera to capture images of the inspection region illuminated by each of the photometric stereo light elements from the respective light source location,

determining light intensity for the respective pixel in each image, and

fitting the response surface to the determined light intensities for the respective images in relation to the corresponding light source locations.

Clause 8. The topographical inspection device of clause 7, wherein the controller is configured to calculate the surface normal vector for each pixel location by:

determining a first vector from the pixel location to the camera;

determining a second vector from the pixel location to the respective response surface maximum; and

bisecting the first and second vectors.

Clause 9. The topographical inspection device of any preceding clause, wherein the controller is configured to make the second topographical measurement by conducting a dot pattern projection routine in which the controller directs the dot pattern projector to project a dot pattern onto the inspection region, directs the camera to capture an image of the dot pattern projected on the inspection region, determine inspection region dot locations in the captured image, and determine surface heights at each of the inspection region dot locations based on the inspection region dot locations.

Clause 10. The topographical inspection device of any preceding clause, wherein the camera has a focal axis and is supported on the device body for the focal axis to be substantially orthogonal to the inspection region.

Clause 11. The topographical inspection device of any preceding clause, wherein the dot pattern projector has a projection axis and the dot pattern projector is mounted on the device body for the projection axis to define a skew angle with the surface less than or equal to 45°.

Clause 12. The topographical inspection device of any preceding clause, wherein the topographical inspection device is configured to detect discontinuities in the inspection region having a dimensions less than 0.0010".

Clause 13. The topographical inspection device of any preceding clause, wherein the device body comprises a light chamber having a distal end portion and a proximal end portion spaced apart along a light chamber axis, the light chamber having an interior and the distal end portion of the light chamber defining a distal opening to the interior of the light chamber, the topographical inspection device configured to be operatively engaged with the surface such that the distal end portion of the light chamber faces the surface and the inspection region of the surface is exposed to the interior of the light chamber through the distal opening.

Clause 14. The topographical inspection device of clause 13, wherein the light chamber is configured so that the light chamber axis is substantially orthogonal to the inspection region when the topographical inspection device is operatively engaged with the surface.

Clause 15. The topographical inspection device of clause 13 or 14, wherein the photometric stereo light elements are mounted in the interior of the light chamber at circumferentially spaced apart locations about the light chamber axis and at axially spaced apart locations along the light chamber axis.

Clause 16. The topographical inspection device of clause 15, wherein each of the photometric stereo light elements is configured to emit light through the distal opening in the distal end portion of the light chamber for illuminating the inspection region.

Clause 17. The topographical inspection device of clause 16, wherein the light chamber defines a plurality of annular light mounting segments spaced apart along the light chamber axis, each annular light mounting segment mounting a set of the photometric stereo light elements at angularly spaced apart locations about the light chamber axis.

Clause 18. The topographical inspection device of clause 17, wherein each annular light mounting segment extends at a respective mounting angle with respect to the light chamber axis and wherein the mounting angles of the light mounting surfaces increase toward the proximal end portion the light chamber.

Clause 19. The topographical inspection device as set forth in any one of clauses 13 to 18, wherein the camera has a focal axis and is mounted on the device body such that the focal axis is parallel to the light chamber axis.

Clause 20. The topographical inspection device as set forth in any one of clauses 13 to 19, wherein the light chamber includes a dot pattern projection opening extending radially through the light chamber.

Clause 21. The topographical inspection device as set forth in clause 20, wherein the device body further comprises a projector holder extending radially outward from the light chamber, the projector holder configured to hold the dot pattern projector such that the dot pattern projector is configured to project the dot pattern through the dot pattern projection opening and the distal opening onto the inspection region of the surface.

Clause 22. A topographical inspection device comprising:

a device body comprising light chamber having a distal end portion and a proximal end portion spaced apart along a light chamber axis, the light chamber having an interior and the distal end portion of the light chamber defining a distal opening to the interior of the light chamber, the light chamber further defining a dot pattern projection opening extending radially through the light chamber at a location spaced apart proximally of the distal end portion, the device body further comprising a projector holder extending radially outward from the light chamber, a plurality of photometric stereo light elements mounted in the interior of the light chamber at spaced apart light source locations, each of the photometric stereo light elements configured for emitting light through the distal opening for illuminating an inspection region of a surface exposed through the distal opening;
a dot pattern projector mounted on the projector holder for projecting a dot pattern through the distal opening onto the inspection region of the surface;
an camera supported on the device body for capturing images of the inspection region of the surface exposed through the distal opening; and
a controller configured to control the photometric stereo light elements, the dot pattern projector, and the camera for making one or more topographical measurements of the inspection region.

Clause 23. A topographical inspection device comprising:

a device body;
a plurality of photometric stereo light elements at spaced apart light source locations along the device body, each of the photometric stereo light elements configured for illuminating an inspection region of a surface;
a camera for capturing images of the inspection region of the surface, each of the images including a plurality of pixels and each of the pixels having a respective pixel location along the inspection region; and
a controller configured to control the photometric stereo light elements and the camera to make a topographical measurement of the inspection region by calculating a surface normal vector for each pixel location based solely on light intensity in pixels of the images at the respective pixel location.

Clause 24. The topographical inspection device of clause 23, wherein before calculating the surface normal vector for each pixel location, the controller is configured to determine a response surface for each pixel location notionally representing intensity of light reflected at the respective pixel location in relation to light source location.

Clause 25. The topographical inspection device of clause 24, wherein the controller is further configured to determine a response surface maximum for each response surface, the response surface maximum indicating the notional light source location where the intensity of light reflected by the inspection region at the respective pixel location is greatest.

Clause 26. The topographical inspection device of clause 25, wherein the controller is configured to determine the response surface for each pixel location by:

conducting a photometric stereo routine in which the controller sequentially directs each of the photometric stereo light elements to individually illuminate the inspection region from the respective light source location and directs the camera to capture images of the inspection region individually illuminated by each of the photometric stereo light elements from the respective light source location,

determining light intensity for the respective pixel in each image, and
fitting the response surface to the determined light intensities for the respective images in relation to the corresponding light source locations.

Clause 27. The topographical inspection device of clause 26, wherein the controller is configured to calculate the surface normal vector for each pixel location by:

determining a first vector from the pixel location to the camera;
determining a second vector from the pixel location to the notional light source location of the response surface maximum; and
bisecting the first and second vectors.

Clause 28. A computer-implemented method of determining a topography of an inspection region of a surface, the method comprising:

sequentially illuminating the inspection region using individual photometric stereo light elements at spaced apart light source locations;
capturing an image of the inspection region as individually illuminated by each of the photometric stereo light elements and such that pixels of each of the images are at stationary pixel locations of the inspection region;
for each stationary pixel location, determining light intensity of the respective pixel in each of the images;
for each stationary pixel location, fitting a response surface to the determined light intensities so that the response surface notionally represents light intensity in relation to light source location;
for each pixel location, determining a response surface maximum for the respective response surface;
for each pixel location, calculating a surface normal vector based on the respective response surface maximum; and
constructing a pixel-location-by-pixel-location surface topography measurement based on the surface normal vector for each pixel location.

BRIEF DESCRIPTION OF THE DRAWINGS

FIG. 1 is a perspective of a topographical inspection device in accordance with the present disclosure;
FIG. 2 is a cross section of the inspection device;
FIG. 3 is a schematic block diagram of the inspection device;
FIG. 4 is a flow chart illustrating a photometric stereo routine conducted by a controller of the inspection device;
FIG. 5 is a flow chart illustrating a dot pattern projection routine conducted by the controller;
FIG. 6 is a schematic illustration of individualized light position vector variation between pixels shown as squares along a bottom line of the image and light source locations shown as circles along a top arc of the image;

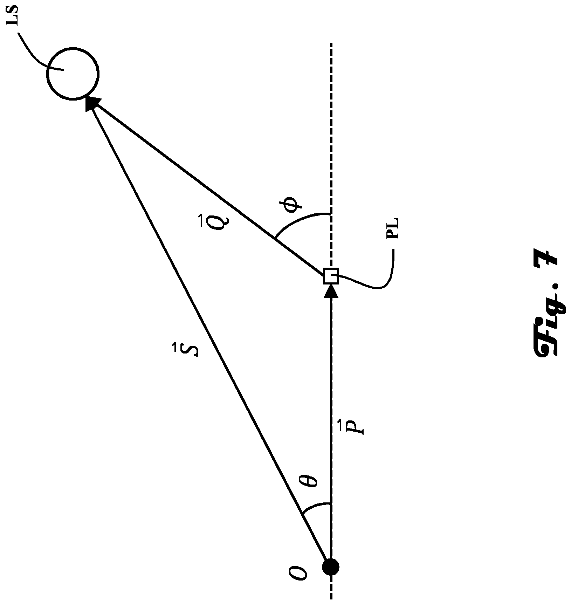

FIG. 7 is a vector diagram showing how an individualized light position vector is determined;
FIG. 8 is a rendering of a ball grid array used to generate simulated images for testing of a photometric stereo measurement method;
FIG. 9 is an image of the simulated ball grid array of FIG. 8 scaled to match images from a Ximea XiC camera with a 0.5X telecentric lens;

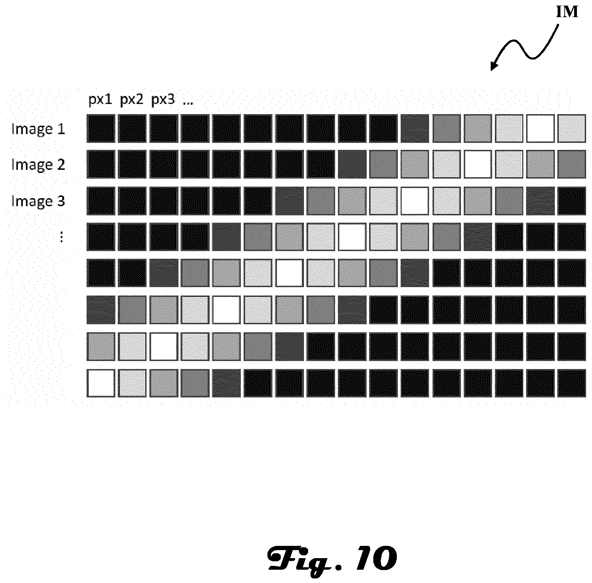

FIG. 10 is an example intensity matrix resulting from simulated images of the ball grid array in a particular row of pixels containing specular reflections from a hemispherical ball surface;
FIG. 11 is a three-dimensional plot of light intensity values in relation to image number and pixel location along the row of pixels from FIG. 10, where each image number corresponds to a simulated image of the ball grid array taken when the ball grid array is illuminated by a given light source at a respective light source location;
FIG. 12 is a plot of two curves notionally representing image intensity in relation to light source angle for one of the pixel locations, wherein the curves are fit to the simulated image intensity values for the pixel location, and wherein one of the curve fits is a Guassian curve fit, the other curve fit is a $3^{rd}$-polynomial curve fit, and both curves are useful predictors of the intensity maximum position for the pixel location;
FIG. 13 is a plot similar to FIG. 12 for another pixel location but wherein the Guassian curve fit is a better predictor of the intensity maximum position for the pixel location;
FIG. 14 is a plot similar to FIGS. 12 and 13 for another pixel location but where neither curve can be used to predict the intensity maximum position for the pixel location;
FIG. 15 is a plot similar to FIGS. 12-14 for another pixel location where the Guassian curve fit was unsuccessful and the

$3^{rd}$-polynomial curve fit did not predict the intensity maximum for the pixel location;

FIG. 16 is a vector diagram showing how a surface normal vector for a pixel location bisects the vector from the pixel location to the intensity maximum position and the vector from the pixel location to the camera location;

FIG. 17 is chart showing surface normal vectors for various pixel locations in the row of pixels from FIG. 10;

FIGS. 18A, 18B, and 18C are illustrations of how a three-dimensional intensity response surface is determined for a based on image brightness at a pixel location in a plurality of images of a surface, wherein each image is illuminated by a different light element in a three dimensional array of light elements, where $\theta_1$ and $\theta_2$ represent the light source position within a cylindrical or spherical coordinate system;

FIG. 19 is a schematic illustration of a dot pattern projector and camera being calibrated to a reference surface at a reference position;

FIG. 20 is screen shot of an image taken by the camera during the calibration step shown in FIG. 19;

FIG. 21 is a schematic illustration similar to FIG. 19 but showing the reference surface displaced from the reference position by a calibrated displacement dimension;

FIG. 22 is a screen of an image taken by the camera during the calibration step shown in FIG. 21, wherein arrows show the displacement of the dot pattern from the locations in FIG. 20;

FIG. 23 is a photograph of a dial indicator being used to determine the displacement of the reference surface during calibration;

FIG. 24 is a screen shot of an image of a dot pattern projection on a surface which has been manipulated by software to include arrows showing correlation of dot displacement within the image space with surface displacement;

FIG. 25 is a schematic illustration showing the relationship between measurement resolution and dot displacement;

FIG. 26 is a photograph of a screen depicting a dot pattern image after software has evaluated the image to determine surface height displacement in relation to the reference surface at each respective dot location and superimposed the surface height displacement measurements for each dot location on the image;

FIG. 27 is a photograph showing a test fixture for a dot pattern measurement using an LED pattern projector;

FIG. 28 is a photograph showing a test fixture for a dot pattern measurement using a laser dot projector;

FIGS. 29-33 are screen shots showing an image processing routine to discern the boundary of a fastener head in a dot pattern image; and

FIG. 34 is a screen shot of a fastener head height measurement made using a dot pattern displacement measurement method.

Corresponding reference characters indicate corresponding parts throughout the drawings.

DETAILED DESCRIPTION

The inventors have found that the topographical inspection device of the '916 patent is highly accurate and regard it as a valuable as a tool for performing local surface inspections for small surface defects in the range 0.0001"-0.001". The inventors believe, however, that it is possible to improve upon the inspection device disclosed in the '916 patent. As will be explained in further detail below, this disclosure pertains to a topographical inspection device that the inventors believe can achieve accuracy that is comparable with or better than the that of the state of the art inspection device of the '916 patent, but without requiring a compressible gel pack between the camera and the surface being inspected. Eliminating the compressible gel pack reduces the cost of inspection and makes inspection easier to perform because there is no need press the device against the structure with sufficient force to operatively compress the gel pack.

As will become apparent, inspection devices of the present disclosure can yield improvements over the prior art by applying a new method of photometric stereo. The inventors have found that conventional photometric stereo methods excel at reproducing three dimensional surface topography with little pixel-to-pixel error. However, large wave form distortions are caused from small pixel-to-pixel error propagated across many pixels in the entire image space. Additionally, traditional photometric stereo processes require a continuous surface profile for three-dimensional surface reconstruction and cannot successfully bridge gaps and features with large vertical gradients. As explained in further detail below, the proposed photometric stereo method is thought to resolve these issues by independently determining surface normal vectors for every pixel location.

As will be further explained below, inspection devices of the present disclosure can also yield improvements over the state of the art topographical inspection device of the '916 patent by combining photometric stereo-based topographical measurement with a dot pattern projection measurement. For example, dot pattern projection is used to obtain highly accurate location information at various points along the surface, and the accurate point location information from the dot pattern projection measurement is used to make corrections to the photometric stereo-based continuous topography measurement.

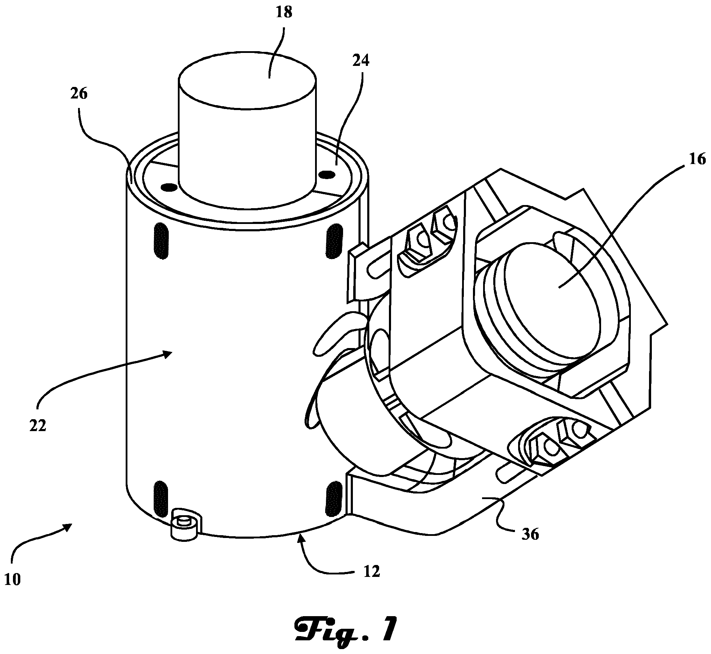

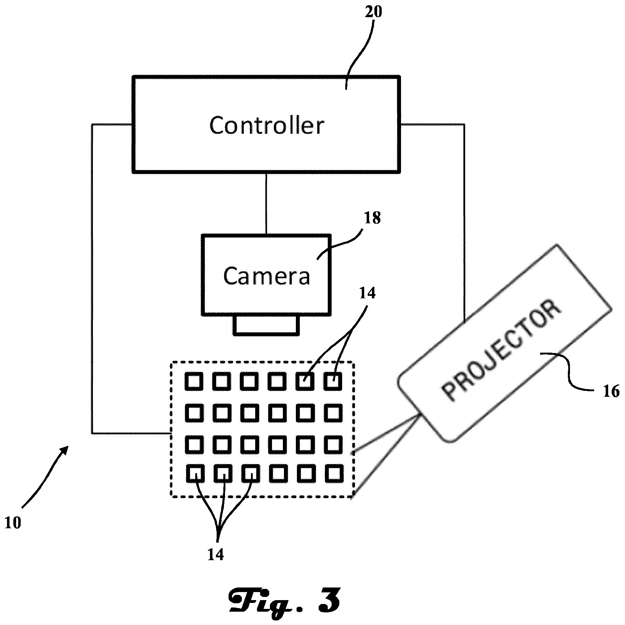

Referring now to FIGS. 1-3, an exemplary embodiment of a topographical inspection device in accordance with the present disclosure is generally indicated at reference number 10. The inspection device 10 broadly comprises a device body 12 that supports a photometric stereo system for making a first topographical measurement of an inspection region IR of a surface S and dot pattern projection system for making a second topographical measurement of the inspection region. The photometric stereo system includes a plurality of photometric stereo light elements 14 at spaced apart light source locations. The dot pattern projection system includes a dot pattern projector 16. The photometric stereo light elements 14 are configured for illuminating the inspection region IR from various angles, and the dot pattern projector 16 is configured for projecting a dot pattern onto the inspection region at a skewed angle β. In the illustrated embodiment, a single camera 18 is used for capturing images of the inspection region IR when illuminated by the light elements 14 and when the dot pattern is projected thereupon. Likewise, a single controller 20 (FIG. 3) is used for controlling the photometric stereo and dot pattern projection. Accordingly, in the illustrated embodiment the same camera 18 and controller 20 are used for both the photometric stereo system and the dot pattern projection system of the topographical inspection device 10. It will be understood, however, that the device 10 could employ more than one camera and/or more than one controller without departing from the scope of the disclosure.

In the illustrated embodiment, the inspection device 10 is configured for inspecting a localized inspection region IR to provide highly accurate measurements of the topography of a manufactured surface within the inspection region. For example, the topographical inspection device 10 can be configured so that the inspection region IR has a first dimension (e.g., length) in an inclusive range of from 32 mm to 133 mm and a second dimension (e.g., width) in an inclusive range of from 24 mm to 100 mm. In one application discussed in greater detail below in Example 2, the inspection device 10 can be used to measure the head height of an individual fastener (e.g., the head height of a rivet on air frame) in relation to a reference surface. Likewise, the inspection device 10 can be used to measure a dimension of interest (e.g., depth) of a small discontinuity on a surface S (e.g., a gouge, a drill run, a scratch, or the like). Suitably, the topographical inspection device is configured to reliably detect and measure discontinuities having a dimension of interest less than 0.0010" (e.g., any such discontinuity having a dimension of interest greater than 0.0001 ").

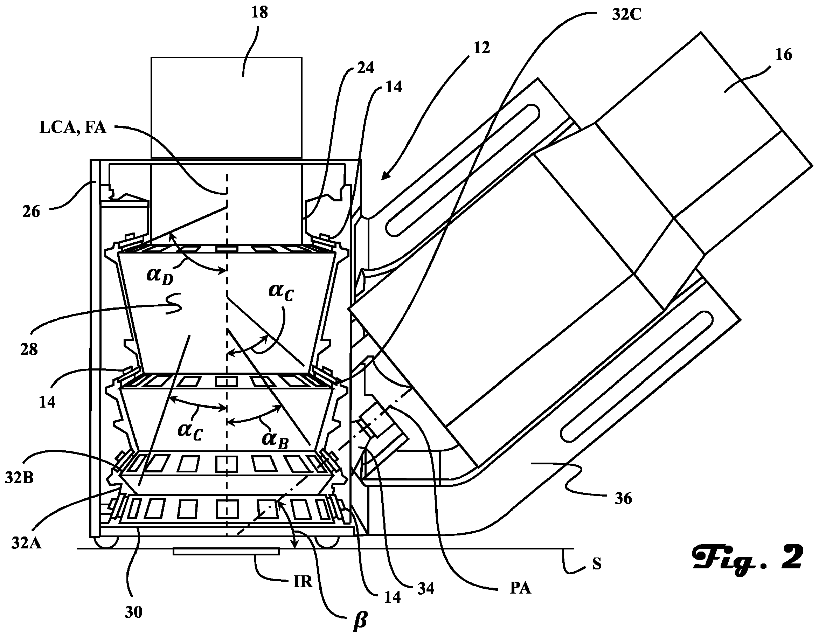

Referring to FIG. 2, the device body comprises a generally cylindrical light chamber 22 for mounting the photometric stereo light elements 14. The illustrated light chamber 22 comprises an internal light holder 24 and an external enclosure 26. The chamber has a distal end portion and a proximal end portion spaced apart along a light chamber axis LCA. The internal light holder 24 defines an interior 28 of the light chamber, and the distal end portion of the light chamber defines a distal opening 30 to the interior of the light chamber. The inspection device 10 is configured to be operatively engaged with the surface S such that the distal end portion of the light chamber 22 faces the surface and the inspection region IR of the surface is exposed to the interior 28 of the light chamber through the distal opening 30. In one or more embodiments, when the inspection device 10 is operatively engaged with the surface S by positioning the distal end portion of the light chamber 22 flush with the surface, the light chamber axis LCA is substantially orthogonal to the surface. As will be explained more fully below, in certain embodiments, the inspection device 10 is used without the compressible gel packs of current state of the art topographical inspection devices. Hence, the device 10 can be operatively engaged with the surface S without forcibly pressing the device against the surface. Whereas the current state of the art topographical inspection devices employing compressible gel packs require on the order of 20 pounds of pressing force to function, the inspection device 10 of the present disclosure can be held against the surface with nearly zero pressing force (e.g., less than 2 pounds pressing force).

In the illustrated embodiment, the camera 18 is mounted on the light chamber 22 near the proximal end portion such that a focal axis FA of the camera is coincident with the light chamber axis LCA. More broadly, the camera 18 could be mounted so that the focal axis FA is parallel to the light chamber axis LCA or otherwise oriented so that the camera can capture images of the inspection region IR through the distal opening 30 in the light chamber 22. Suitably, the device body 12 and camera 18 are configured so that the camera 18 has a fixed (known) position in relation to the dot pattern projector 16 and/or light elements 14. The camera 18 is configured to capture images having a length and a width including the inspection region. The camera images can be larger than the inspection region IR such that there is a margin around the inspection region in each image. Alternatively, the camera images can be coextensive with the inspection region. Each image captured by the camera 18 comprises a digital image made up of pixels that depict the color sensed by the camera at respective pixel locations. As will be explained in further detail below, when the inspection device 10 makes topography measurement using photometric stereo, the camera 18 captures multiple images of the inspection region IR while the device is stationary such that the pixel locations do not change from one image to the next.

The photometric stereo light elements 14 are mounted in the interior 30 of the light chamber 22 at respective light source locations that are both (i) spaced apart circumferentially about the light chamber axis LCA and (ii) spaced apart axially along the light chamber axis. Suitably, each photometric stereo light element 14 comprises a light emitting diode (LED) configured for emitting light at the same wavelength(s) and brightness. In general, the light source locations are selected so that each LED 14 is configured to illuminate the inspection region through the distal opening 30. In addition, the light source locations are selected so that, as will be described in further detail below, the controller 20 can determine, for every pixel location, a response surface that notionally represents the light intensity response at the pixel location in relation to light source location.

In the illustrated embodiment, the internal light holder 24 of the light chamber 22 comprises a plurality of annular light mounting segments 32A-32D at spaced apart locations along the light chamber axis LCA. Each annular light mounting segment 32A-32D is configured to mount a set of the photometric stereo light elements 14 (e.g., a set of twelve photometric stereo light elements 14) at angularly spaced apart locations about the light chamber axis LCA. Each light mounting segment 32A-32D defines LED mounting holes 34 for the photometric stereo light elements 14 in the respective set. Each LED mounting hole 34 is configured to mount the respective light element 14 so that the front face of the LED is substantially parallel to the respective light mounting segment 32A-32D. Each annular light mounting segment 32A-32D extends at a respective mounting angle $\alpha_A$-$\alpha_D$ in relation to the light chamber axis LCA. Suitably, the mounting angles $\alpha_A$-$\alpha_D$ of the light mounting surfaces 32A-32D increase toward the proximal end portion the light chamber. This orients each LED 14 at its respective light source location to face and illuminate the inspection region IR through the distal opening 30.

The light chamber 22 defines a dot pattern projection opening 34 that opens radially through the light chamber wall at a location spaced apart proximally from the distal end portion of the light chamber. Referring to FIGS. 1 and 2, the device body 12 further comprises a projector holder 36 extending radially outward from the light chamber 22. The projector holder 36 is generally configured to hold the dot pattern projector 16 so that the dot pattern projector can project a dot pattern onto the inspection region IR. More specifically, the illustrated projector holder 36 is configured to hold the dot pattern projector 16 such that the dot pattern projector is configured to project the dot pattern through the dot pattern projection opening 34 and the distal opening 30 onto the inspection region IR of the surface S. The dot pattern projector 16 has a projection axis PA. In one or more embodiments, the projector holder 36 is configured to hold the dot pattern projector 16 so that the projection axis PA defines a skew angle $\beta$ with the surface S. For reasons explained more fully below, the skew angle $\beta$ is preferably less than or equal to 45°. In certain embodiments, the projector holder 36 is configured to hold the dot pattern projector 16 so that a distance along the projection axis PA between the dot pattern projector and the inspection region is in an inclusive range of from 28 mm to 900 mm.

In general, the dot pattern projector 16 is configured to project a dot pattern image onto the surface S. For example, the dot pattern image may be a two dimensional grid of illuminated dots. In certain embodiments, the dot pattern projector 16 is configured to project the dot pattern image onto the surface S so that there are greater than or equal to 12 dots-per-mm along the inspection region IR in both the lengthwise and widthwise directions. Any suitable type of dot pattern projector 16 can be used without departing from the scope of the disclosure. In one embodiment, the dot pattern projector 16 comprises an LED light pattern projector. In another embodiment, the dot pattern projector 16 comprises a laser dot projector. Still other types of dot pattern projectors can be used without departing from the scope of the disclosure.

Suitably, the dot pattern projection system can be calibrated in relation to a planar reference surface. For example, the controller 20 comprises memory storing calibration data that relates dot locations in a camera image of the surface S to the vertical height of the surface (e.g., along the axis LCA, FA) at each respective dot location. As explained more fully in Example 2 below, the inspection device 10 can be calibrated by projecting a dot pattern onto to a planar reference surface at (i) a reference height and (ii) one or more additional calibration heights. Then by measuring the displacement of the dots in one or more calibration height images from (ii) in relation to the reference height image from (i), the relationship between surface height and dot displacement can be established and stored in memory.

As mentioned above, the skew angle $\beta$ is preferably less than or equal to 45°. A skew angle $\beta$ of less than or equal to 45° ensures that, at any dot location, vertical displacement of the surface S (e.g., along the axis LCA, FA) in relation to a calibrated reference surface causes equal or greater displacement of the projected dot location along the surface (e.g., in the lengthwise and/or widthwise direction) in relation to where the dot would be projected onto the calibrated reference surface. This facilitates detection of vertical surface displacement based on dot displacement in an image captured by the camera 18.

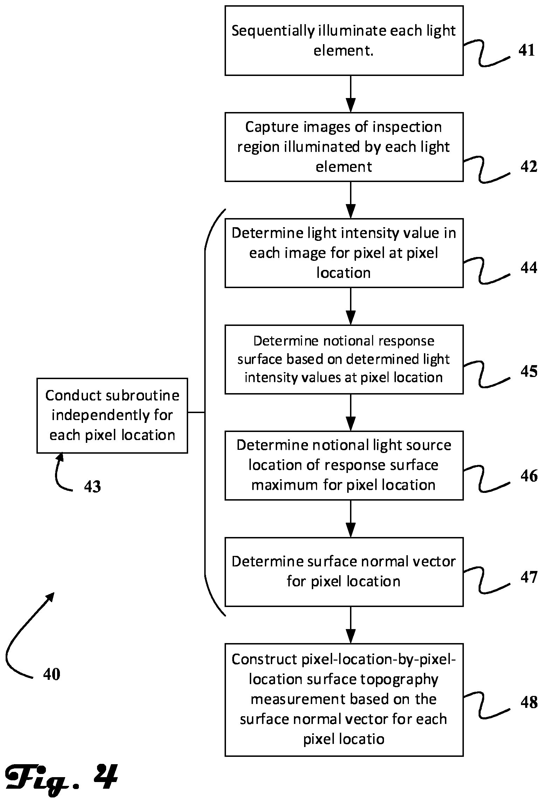

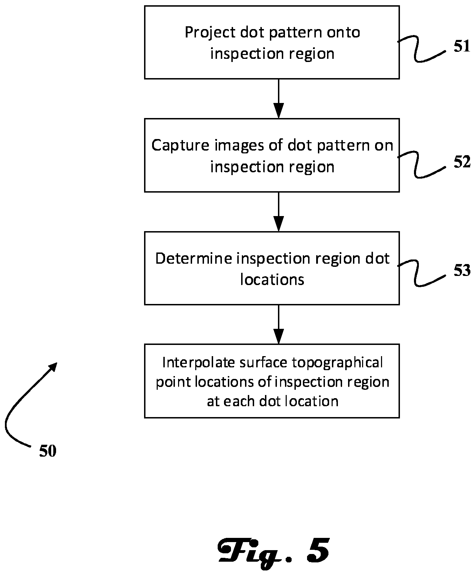

Referring to FIG. 3, the controller 20 is generally configured to control the photometric stereo light elements 16 and the camera 18 for making a first topographical measurement of the inspection region IR and to control the dot pattern projector 16 and the camera 18 for making a second topographical measurement of the inspection region. The controller 20 can comprise a processor and memory storing processor-executable instructions that, when executed by the processor, configure the processor to perform one or more topography measurement routines. A photometric stereo-based topography measurement routine is shown by way of flow chart in FIG. 4, and a dot pattern projection measurement routine is shown similarly in FIG. 5.

Referring to FIG. 4, an exemplary embodiment of a photometric stereo routine that may be conducted by the controller 20 to obtain a photometric stereo-based measurement of surface topography is generally indicated at reference number 40. As will become apparent to those skilled in the art, the photometric stereo routine 40 uses different image processing and evaluation techniques than conventional photometric stereo. The inventors believe that the photometric stereo routine 40 is able to substantially eliminate the requirement for generalized assumptions about a surface's reflectivity, diffusion, and continuity because it analyzes each pixel location independently of all other pixel locations. As a result, a compressible gel pack is not required to make the photometric stereo measurement.

Although the drawings show a testing device 10 that uses a combination of photometric stereo and a dot pattern projection to determine surface topography, this disclosure also expressly contemplates topography inspection devices and computer-implemented topography measuring methods employing one or more aspects of the photometric stereo routine 40 independent of dot pattern projection. That is, the inventors believe that the photometric stereo routine 40 provides advantages over conventional photometric stereo with or without the additional benefits added by combining photometric stereo and dot pattern projection.

To conduct the photometric stereo routine 40 using the inspection device 10, a user operatively engages the distal end portion of the light chamber 22 with the surface S and keeps the device stationary while the controller 20 carries out the routine. With device 10 held stationary in the operative position, the controller 20 conducts the routine 40 by sequentially illuminating the inspection region IR with each individual photometric stereo light element 14 (step 41) and controlling the camera 18 to capture an image of the inspection region IR while it is illuminated by each light element (step 42). Accordingly, for the inspection device 10 shown in FIGS. 1-2, the controller 20 individually illuminates each of the 48 light elements 14 and takes 48 discrete images of the inspection region IR. Each of the 48 images shows the inspection region IR illuminated by a different one of the light elements from its respective light source location. Since the inspection device 10 and camera 18 are held stationary, the pixels in each image correspond to the same pixel location.

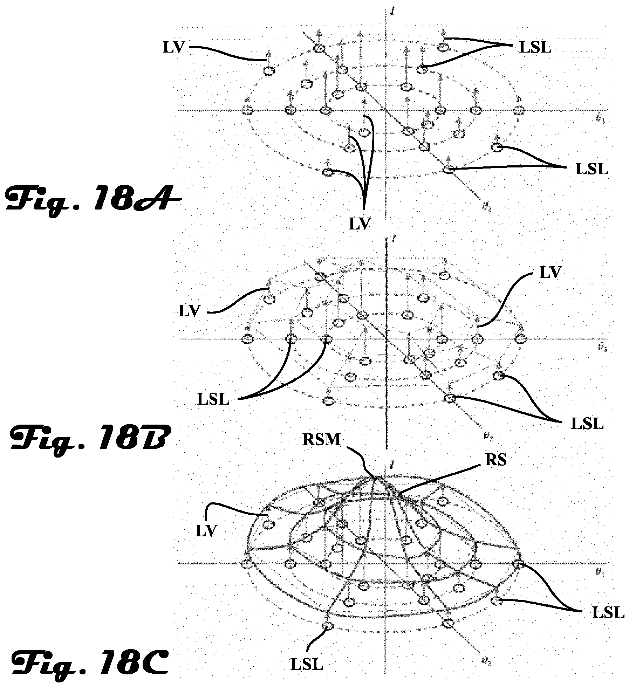

After each image is captured, the controller 20 conducts a surface normal vector determination subroutine 43 for each pixel location of the inspection region IR. Example 1 below provides a detailed example of one embodiment of the surface normal vector determination subroutine 43, which is described in more general terms here. As mentioned, the subroutine 43 is conducted independently for every pixel location in the inspection region IR. Accordingly, as an example, if the camera 18 has a five-megapixel image sensor, the controller 20 would conduct the subroutine 43 up to 5,000,000 times to independently determine the surface normal vector for each pixel location. For each pixel location, the subroutine 43 comprises an initial step 44 of determining the light intensity at the respective pixel location in each of the images. Step 44 may comprise determining the grayscale value for the pixel in each of the camera images. After determining the light intensity for the pixel in each camera image, in step 45, the controller 20 plots the determined light intensity values in relation to light source location in a defined three-dimensional coordinate system (e.g., in a cylindrical or spherical coordinate system) and fits a response surface to the plotted light intensity values. FIGS. 18A-18B of Example 1 show a response surface RS fitted to a plot of measured light intensity vectors LV in relation to light source locations LSL in a cylindrical coordinate system. Various surface fit algorithms can be used without departing from the scope of the disclosure. The fitted response surface notionally represents the light intensity at the respective pixel location in relation to light source location in the three dimensional coordinate system.

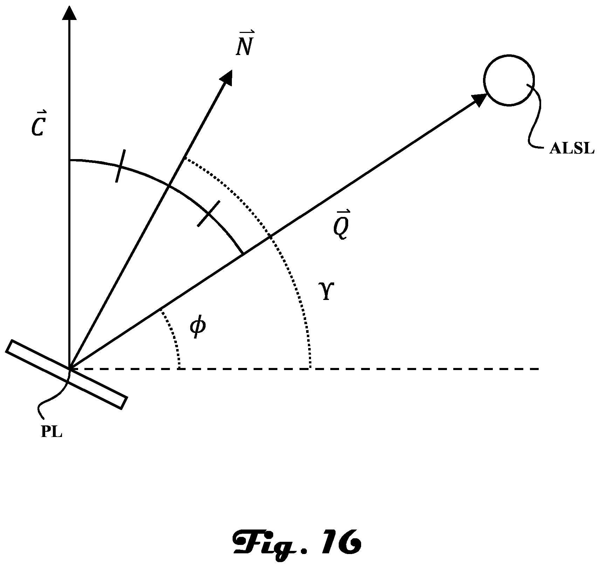

After determining the response surface RS, the controller 20 determines the response surface maximum (RSM in FIG. 18C) for the response surface (step 46). The response surface maximum indicates the notional light source location that would cause the greatest intensity of light to be reflected from the pixel location to the camera 18. After determining the response surface maximum, in step 47, the controller 20 can determine a surface normal vector for the pixel location. In an exemplary embodiment, the controller 20 determines the surface normal vector by (a) determining a first vector from the pixel location to the image sensor of the camera, (b) determining a second vector from the pixel location to the notional light source location of the response surface maximum, and (c) bisecting the first and second vectors. See FIG. 16 of Example 1, where $\vec{Q}$ is the vector from the pixel location PL to the notional light source location NLSL of the response surface maximum position, $\vec{C}$ is the vector from from the pixel location to the camera, and $\vec{N}$ is the surface normal vector from the pixel location, which bisects the other two vectors.

It can be seen that conducting the surface normal vector determination subroutine 43 for each pixel location yields a surface normal vector for each pixel location that is determined solely on the basis of image pixels for that pixel location. Hence, the surface normal vector for each pixel location is determined independent of the image data for every other pixel location. This eliminates the need for uniform reflectivity, diffusion, or continuity across the surface and therefore eliminates the need for compressible gel packs. Further, the independent determination of the surface normal vector for each pixel location may reduce pixel-to-pixel error propagation relative to conventional photometric stereo, thereby improving topographical measurement accuracy.

After completing the surface normal vector determination subroutine 43 for each pixel location, in step 48, the controller constructs a pixel-location-by-pixel-location surface topography measurement based on the surface normal vector for each pixel location. Those skilled in the art will appreciate that the pixel-location-by-pixel-location surface topography measurement can produce a three-dimensional surface reconstruction that includes very small discontinuities, e.g., dimensions on the order of 0.0001" or less.

Referring to FIG. 5, an exemplary embodiment of a dot pattern projection routine that may be conducted by the controller 20 to obtain a dot pattern projection-based measurement of surface topography is generally indicated at reference number 50. In certain embodiments, it is envisioned that the controller 20 will conduct the photometric stereo routine 40 and dot pattern projection routine 50 in close succession such that the user holds the inspection device 10 stationary at the operative position as the controller conducts both routines in series. It is also contemplated that the inspection device 10 could be selectively used to conduct inspections employing only one topographical measurement modality. For example, the user could select to perform only a dot pattern projection routine 50 or only a photometric stereo routine 40 in some instances, as desired. As explained in Example 2, the dot pattern projection routine 50 has been found to be usable as an independent measurement of fastener head height with high accuracy.

Dot patter projection measurement begins by placing a pre-calibrated inspection device 10 into operative engagement with the surface S. With the inspection device 10 held at the operative position on the surface S, the controller 20 conducts the dot pattern projection routine 50 by directing the dot pattern projector 16 to project a dot pattern onto inspection region IR (step 51) and directing the camera 16 to capture an image of the dot pattern projected on the inspection region IR (step 52). Subsequently, the controller determines the location of the dots in the inspection image (step 53), which are referred to as the inspection region dot locations in FIG. 5. As explained more fully in Example 2 below, in one embodiment, the inspection region dot locations are determined using a blob detection algorithm (e.g., OpevCV's blob detector), which uses image thresholding and/or edge detection to identify groups of like pixels. After the dots are detected as blobs, the controller 20 may determine the centroid of each blob and use the centroid as the respective inspection region dot location. After the controller 20 determines the inspection region dot locations in step 53, the controller compares the inspection region dot locations to predefined reference dot locations stored in memory to determine dot displacement (step 54). Suitably, as explained above, the reference dot locations represent the locations of dots projected onto a reference surface at a known position in relation to the camera 18 and dot pattern projector 16 (e.g., a planar reference surface that is flush with the distal end of the light chamber 22). Based on displacement of each dot determined in step 53, the controller then interpolates very accurate point information for the vertical surface height at each dot location. The surface height measurements for each dot location form the dot pattern projection-based topography measurement of the dot projection routine 50. Accordingly, it can be seen that, whereas the photometric stereo routine 40 produces a continuous topography measurement for the inspection region IR, the dot pattern projection routine 50 produces discontinuous point location measurements of surface height.

In one or more embodiments, the controller 20 is further configured to combine the photometric stereo-based surface topography measurement with the dot pattern projection-based topography measurement to obtain a refined surface topography measurement. For example, because the point measurements of surface height determined using the dot pattern projection routine 50 are highly accurate, they can be used to make corrections to the continuous topography measurement made using the photometric stereo routine 40. Various mathematical algorithms for making corrections to the photometric stereo-based topography measurement based on the topographical point measurements determined using the dot pattern projection routine 50 can be used without departing from the scope of the disclosure. In one or more embodiments, the controller 20 uses the dot pattern projection-based topographical point measurements to correct wave form distortion in the photometric stereo-based topographical measurement. Accordingly, while it is presently preferred to utilize the new photometric stereo routine 40 to obtain the photometric stereo-based topographical measurement, it is alternatively contemplated that inspection devices in accordance with the present disclosure can employ conventional photometric stereo algorithms and use the dot pattern projection-based topographical measurement to correct wave form distortion in the conventional photometric stereo-based topographical measurement.

Accordingly, it can be seen that the inspection device 10 provides improved surface topography measurement for detecting very small surface defects in the range of 0.0001"-0.001". Because the photometric stereo routine 40 yields a surface normal measurement for each pixel location independent of other pixels, uniform surface reflectivity, diffusion, and continuity are not required to accurately reconstruct surface topography. As a result, the inspection device 10 does not require a compressible gel pack to obtain accurate measurements, and is therefore used without a gel pack. Furthermore, by providing a separate dot pattern projection-based measurement system, the inspection device 10 can be used to correct the surface topography measurement made by photometric stereo and reduce errors inherent to the photometric stereo process.

Further Examples of photometric stereo and dot pattern projection techniques in accordance with the present disclosure are provided below.

**Example** 1: **Photometric** Stereo

In this Example, a simulation was conducted to assess the proposed photometric stereo methodology.

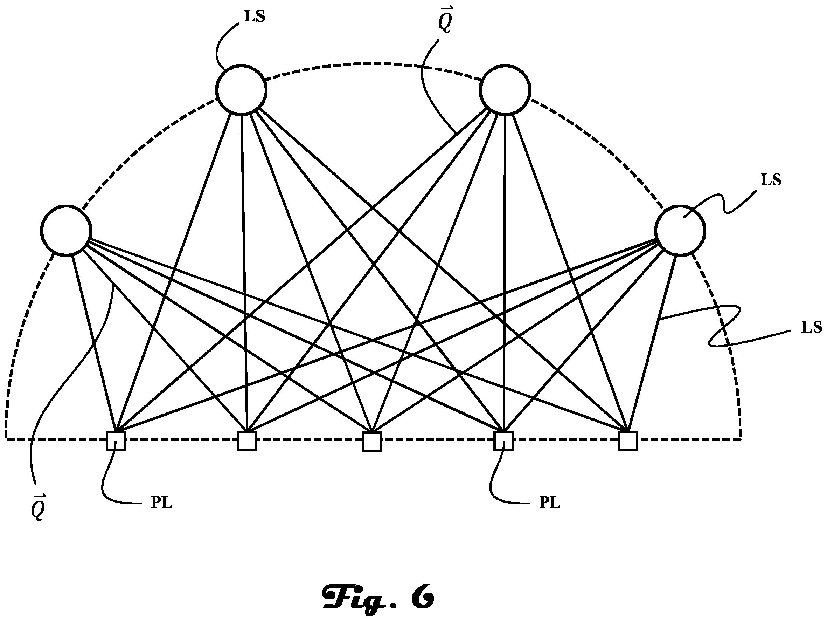

FIG. 6 schematically illustrates a set of simulated light source locations LS and pixel locations PL, as well as individualized light position vectors $\vec{Q}$ extending from each pixel location to each light source location. For purposes of Example 1, it is assumed that the positions of each light source in relation to the inspection region IR are known. But in practice, calibration will be conducted to ensure precise characterization of the position of each light source.

Before a single pixel's individualized light intensity response can be characterized, the light source positions LS relative to the pixel are determined to ensure that the position change relative to the pixel is properly characterized. This process is done by subtracting the pixel's position vector ($\vec{P}$) from the light source's position vector ($\vec{S}$), as shown in FIG.

7 and Eq. (1) and (2), to produce its individualized light position (ILP) ($\vec{Q}$).

$$\vec{Q} = \vec{S} - \vec{P} \tag{1}$$

$$\Phi = \cos^{-1}\left(\frac{Q_i}{\|\vec{Q}\|}\right) \tag{2}$$

For each light source, the camera captures an image. This provides intensity values (via the pixel's grayscale value) for each light position. These intensity values can be used to derive a continuous function for characterizing the pixel's relationship between light position and intensity.

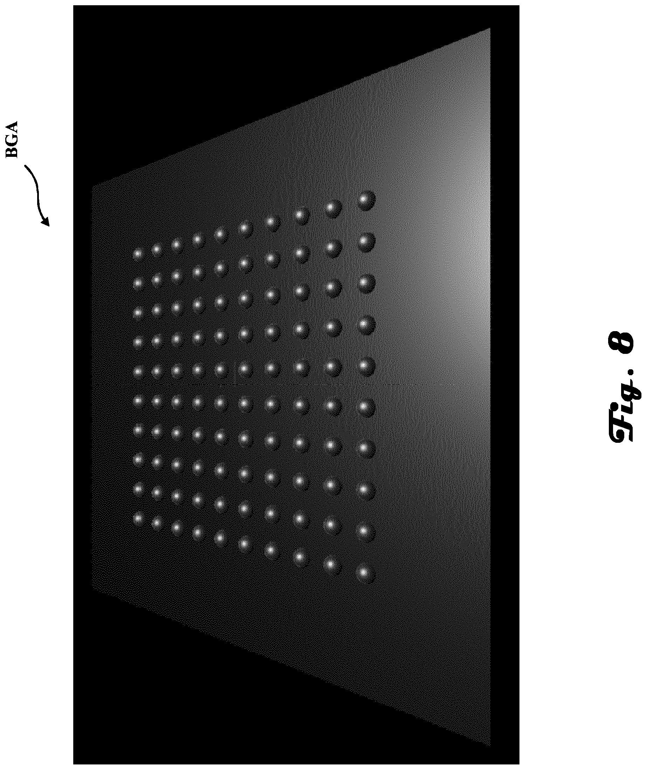

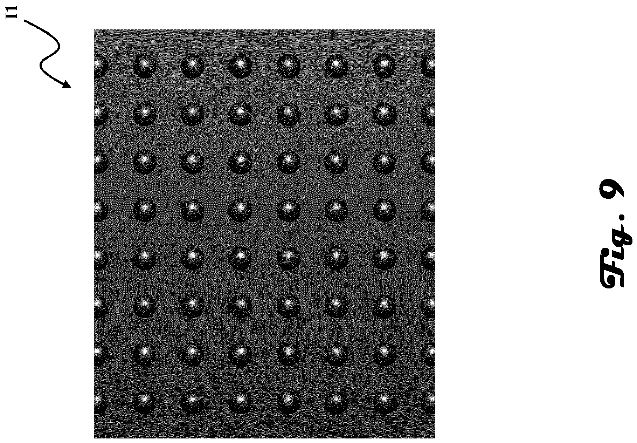

A simulated environment was produced to generate images closely matching the output from a Ximea XiC 5MP camera with a 0.5X telecentric lens. Each pixel represents a 0.0069mm $\times$ 0.0069mm area of the surface. For simulation, a ball grid array (BGA) comprised of 1mm diameter hemispheres with 2mm spacing was modeled. Eight light positions were simulated, at 30°, 45°, 60°, 75°, 105°, 120°, 135°, and 150° from the +x-axis, where the center of the arc was positioned at the center of the BGA, and at a radius of 100mm. FIG. 8 shows a rendering of the BGA used for simulating image output, and FIG. 9 depicts an image I1, which is one of the eight images derived for the simulated environment.

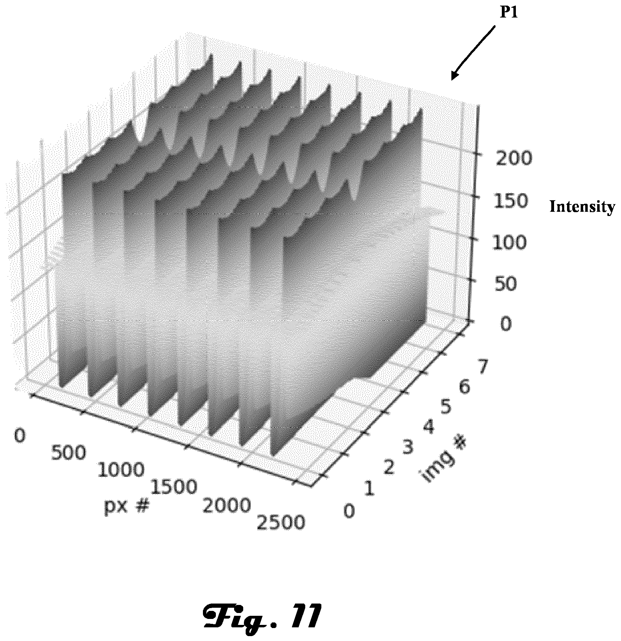

In practice, light positions would vary in x, *y,* and z directions. However, demonstration of the fundamental concept is simpler when light positions only vary along one plane, resulting in a response curve rather than a response surface. Additionally, computations were simplified by only processing pixels within a single row of each image. After simulating images from the eight previously defined light positions (30°, 45°, 60°, 75°, 105°, 120°, 135°, and 150° from the +x-axis), an intensity matrix IM is derived as shown in FIG. 5. A particular row of pixels was chosen for the simulation because it contained pixels with specular reflections from the hemispheres in the BGA. FIG. 11 shows a plot P1 of intensity values for all pixels in the chosen row for the eight light position images.

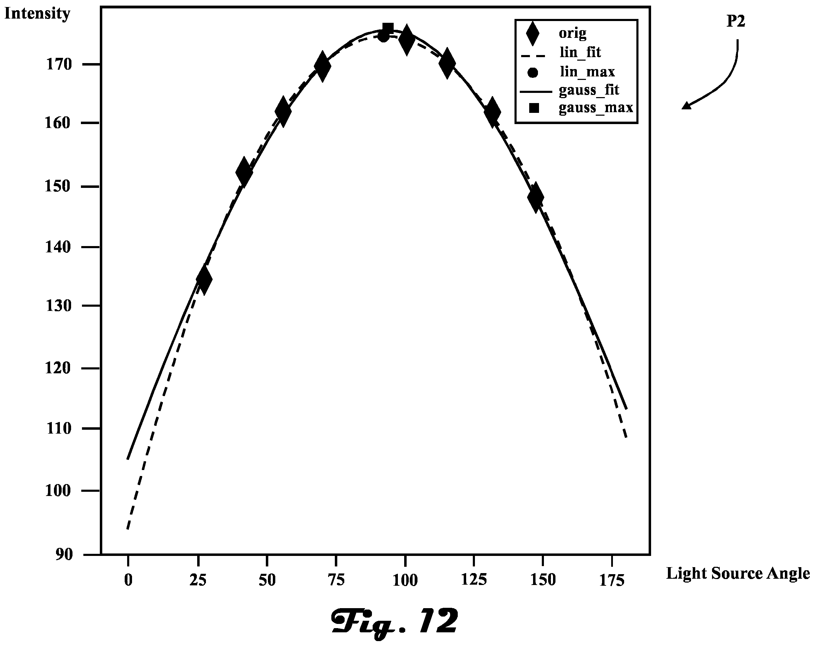

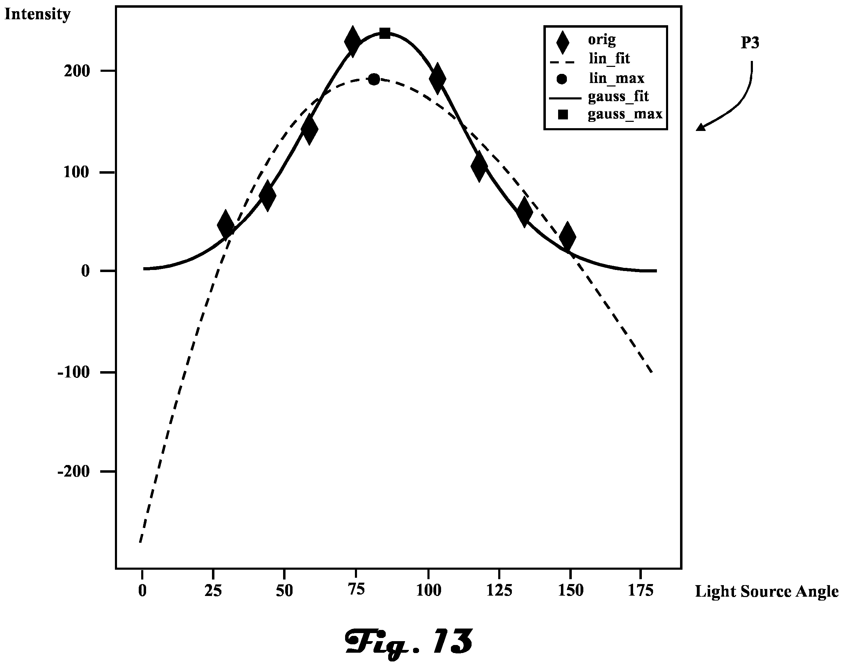

Once the pixel intensity values are obtained, they are arranged into intensity matrix $I_{ij}$, as shown in Eq. (3). Note that while computations are conducted with values arranged in a row-maj or matrix (rows of intensities corresponding to a single pixel), a column-major matrix would be equally effective. From matrix $I_{ij}$ a continuous function is derived for each set of pixel intensity values (I;.) (see plots P2-P5 of FIGS. 12-15). Then, the maximum is found for each derived function.

$$I_{ij} = \begin{bmatrix} I_{0,0} & I_{0,1} & \cdots & I_{0,j} \\ I_{1,0} & I_{1,1} & \cdots & I_{1,j} \\ \vdots & \vdots & \ddots & \vdots \\ I_{i,0} & I_{i,1} & \cdots & I_{i,j} \end{bmatrix}, \text{where } i = \text{pixel and } j = \vec{Q} \tag{3}$$

The initial method used for curve fitting intensity values was least squares 3rd-order polynomial fitting. Then the derivative of the polynomial was used to find the maxima:

$$f(\vec{Q}) = C_0 + C_1\vec{Q} + C_2\vec{Q}^2 + C_3\vec{Q}^3 \tag{4}$$

$$\frac{df(\vec{Q})}{d\vec{Q}} = C_1 + 2C_2\vec{Q} + C_3\vec{Q}^2 \tag{5}$$

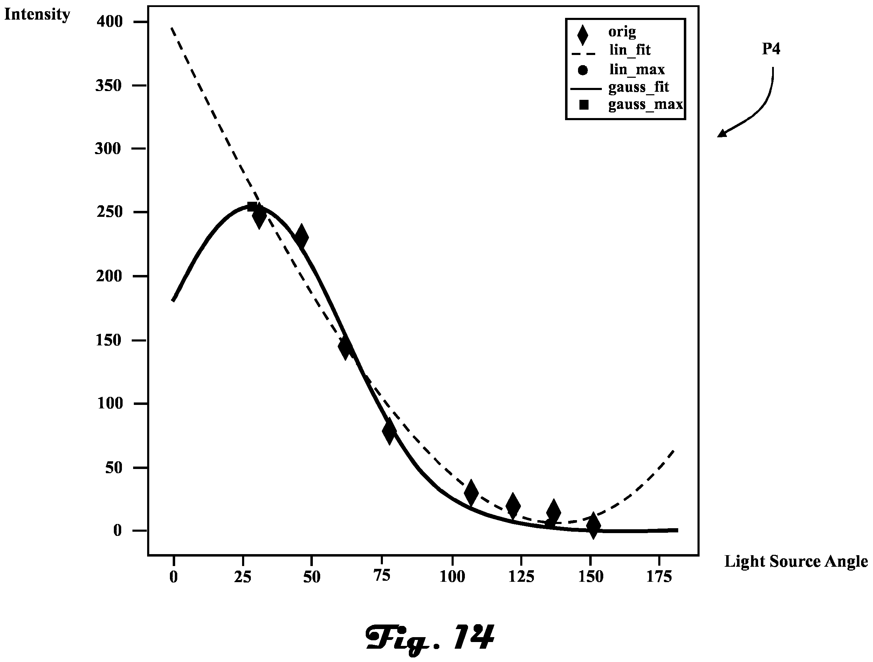

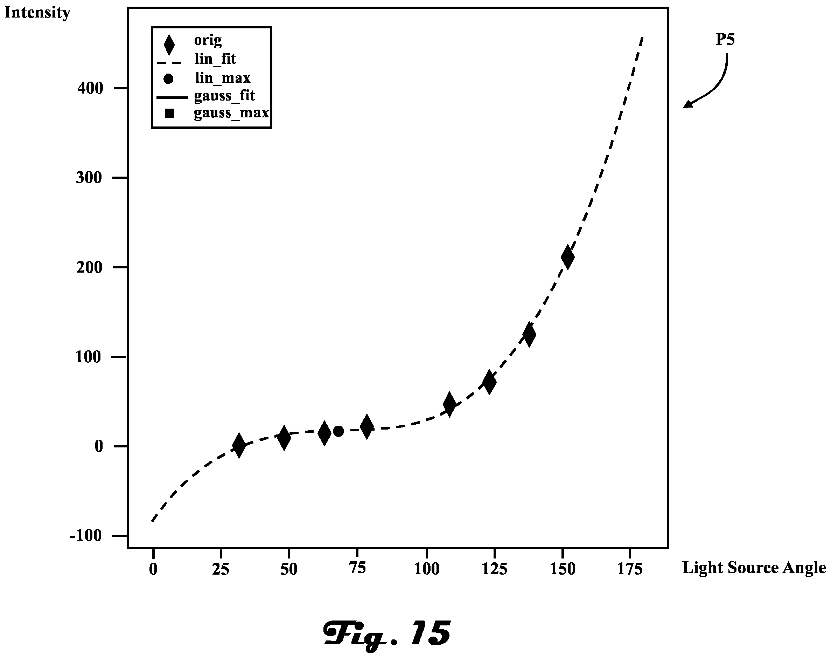

While this method was successful in producing continuous functions for a wide range of intensity value patterns, conditions were encountered that produced a function where a usable maximum could not be found (FIGS. 14, 15). Use of a Gaussian function, Eq. (6) where $\alpha$ is the peak intensity, $\mu$ is the maximum intensity position, and $\sigma$ is the intensity standard deviation) improved the results (FIG. 12).

$$f(\vec{Q}) = a \exp\left(\frac{(x-\mu)^2}{2\sigma^2}\right) \tag{6}$$

Third-order polynomial fitting was still used to provide an initial guess minimizing the error between the Gaussian function and the intensity values. This helped reduce computations and reduce the probability of reaching the maximum iterations before finding a solution within the provided tolerance. More research will clarify the conditions where either curve fitting and minimization process fails to produce a viable intensity maxima position.

Referring to FIG. 16, the normal vector ($\vec{N}$) for each pixel was calculated from the response curve maximum, which indicates the notional light source location NLSL (FIG. 16) where light intensity at the pixel location PL would be greatest. More specifically, the normal vector ($\vec{N}$) was calculated by bisecting the vector ($\vec{Q}$) from the pixel location PL to the intensity maximum location NLSL and the vector (C), from the pixel location to the camera, as shown in FIG. 16 and Eq. (7). Here, it is assumed that the camera axis is congruent with the global z-axis.

$$\vec{C} = (1,0)$$
$$\vec{N} = \|\vec{C}\|\vec{P} + \vec{C}\|\vec{P}\| \tag{7}$$

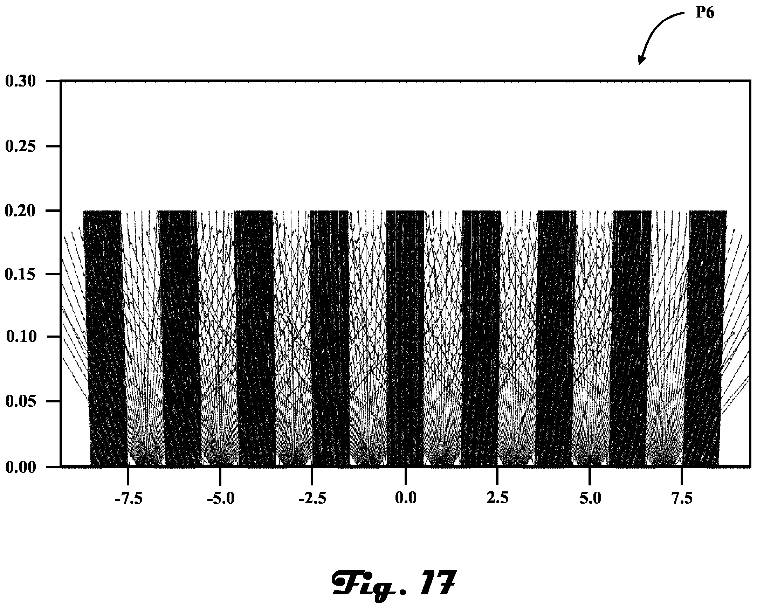

FIG. 17 shows a plot P6 of the normal vectors calculated from the series of BGA images analyzed in the simulation, but vector solutions where $135° < \phi < 45°$ are deleted for clarity.

Referring to FIGS. 18A-18C, the proposed response surface methodology could be expanded to a three-dimensional array of light sources from the two-dimensional array considered in the simulation. The methodology would change very little, aside from a significant increase in computational effort. FIGS. 18A-18C depict one way of deriving an intensity response surface RS and response surface maximum RSM in a cylindrical or spherical coordinate system based on known light source locations LSL and corresponding light intensity values LV. Note that Cartesian coordinates could still be used, but it would create a third spatial dimension variable and, therefore, a four-dimensional intensity response surface.

## Example 2: Dot Pattern Projection Measurement

This Example 2 describes bench testing of the proposed dot pattern projection measurement system described above.

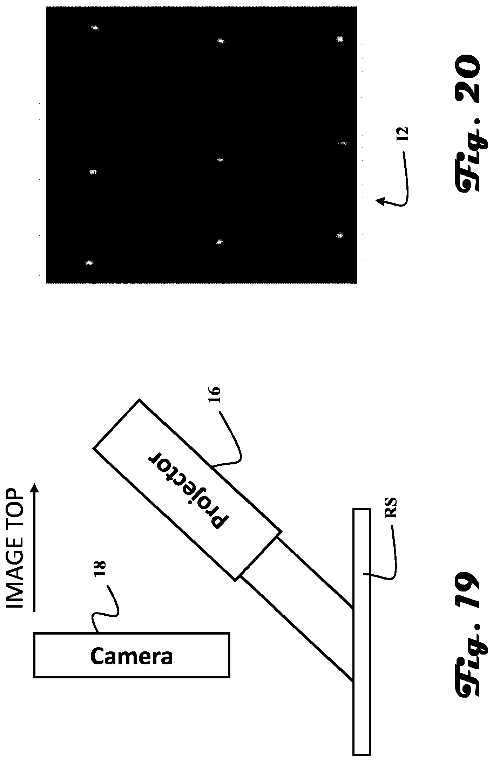

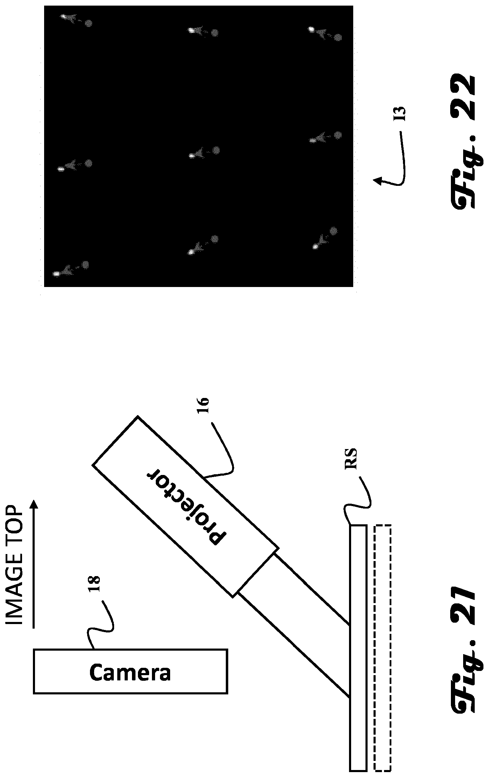

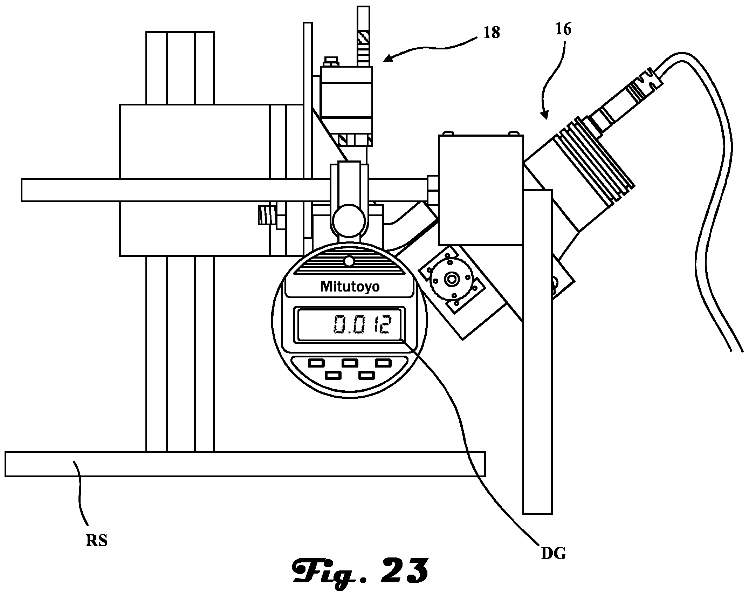

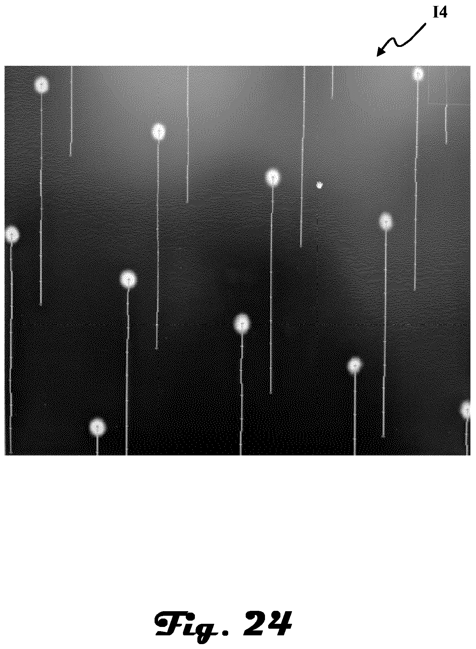

Referring to FIGS. 19-23, initially, a calibration process was conducted with a reference surface RS in order to obtain the projected dot position reference location within the image space. Then a precise correlation between surface displacement and displacement of each dot within the image space is obtained. FIG. 19 schematically illustrates the dot pattern projector 16 as it projected a dot pattern onto a reference surface RS at a reference position, and FIG. 20 shows the resulting image I2 captured by the camera 20. FIG. 21 schematically illustrates the dot pattern projector 16 as it projected a dot pattern onto the reference surface RS displaced from the reference position, and FIG. 22 shows the resulting image I3 captured by the camera 20 with superimposed arrows showing the displacement of the dots from their reference positions in FIG. 20. FIG. 23 shows the dial gauge DG used to measure displacement of the reference surface RS during calibration. The camera 18 was equipped with a telecentric lens to reduce the complexity of the relationship between dot displacement and surface height to a first-order linear equation (see image I4 in FIG. 24).

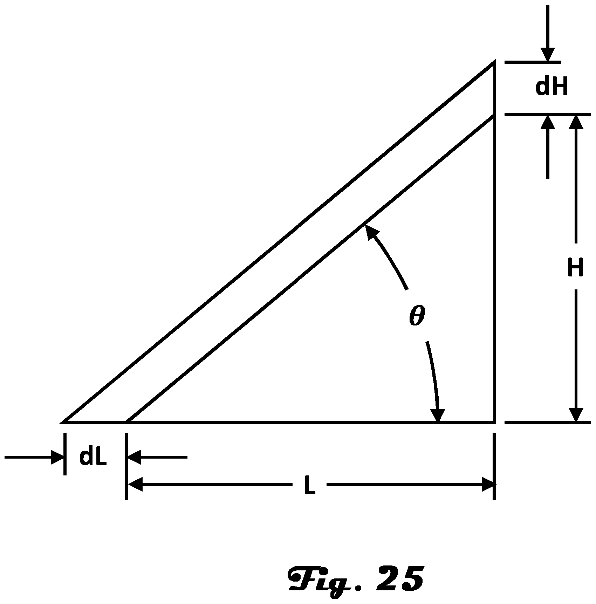

Note that the resolution of the final measurement is directly proportional to the magnitude of displacement within the image space, and, hence, the projection angle, as outlined in FIG. 25 and Eq. (8). For example, if the dot pattern was projected onto the surface at 45° ($\theta = \pi/4$), there would be a 1:1 relationship between surface displacement and dot displacement. A projection angle < 45° would result in > 1 unit (i.e. magnified) dot displacement for every 1 unit of surface displacement. This is especially important because the measurement displacement is also limited by the pixel size of the camera sensor. In other words, without subpixel resolution methods, the minimally discernable measurement increment is the distance from one pixel to the next.

$$dz_{\text{meas}} = dL = \frac{dH}{\tan \theta} \tag{8}$$

It can be seen that the dot projection measurement system subject to testing used a camera 18 with a telecentric lens, a dot pattern projector 16, and a platform RS with height adjustment. Fixtures were designed to hold the camera 18 and dot pattern projector 16 stationary relative to each other in order to maintain calibration by ensuring the relationship between dot pattern and the image space remains constant. As shown in FIG. 23 the dial gauge DG was used to measure the reference surface displacement. Care was taken to ensure the middle of the calibration range was aligned as close as possible to the middle of the camera's focal range, in order to enable both positive and negative surface deviations. If the primary use case were for depression measurement, it may be advantageous to bias the nominal state to the upper end of the focal range.

OpenCV, a C++ computer vision library, was used to extract relevant information from the camera images. In each image, the dots were identified by using OpenCV's simple blob detector, which utilizes a combination of thresholding and edge detection methods to identify groups of like pixels. Various parameters of the blob detector tool were adjusted in order to determine an optimal combination of threshold, circularity, and inertia constraints.

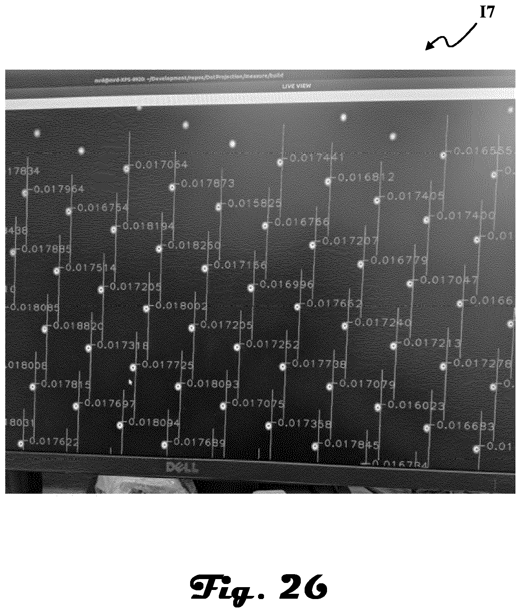

Due to the location of the dot being defined by the dot centroid, which may not correspond precisely with the calibration line pixels, the centroid positions were projected normal to the calibration lines. This is particularly noticeable as the dots are displaced along a non-ideal surface which would cause the dots to warp, causing the centroid to shift. Later, blurring was used to dampen dot shape and intensity variation. FIG. 26 shows an image I7 depicting successful measurement of surface height for each dot location. The calibration lines are shown for reference.

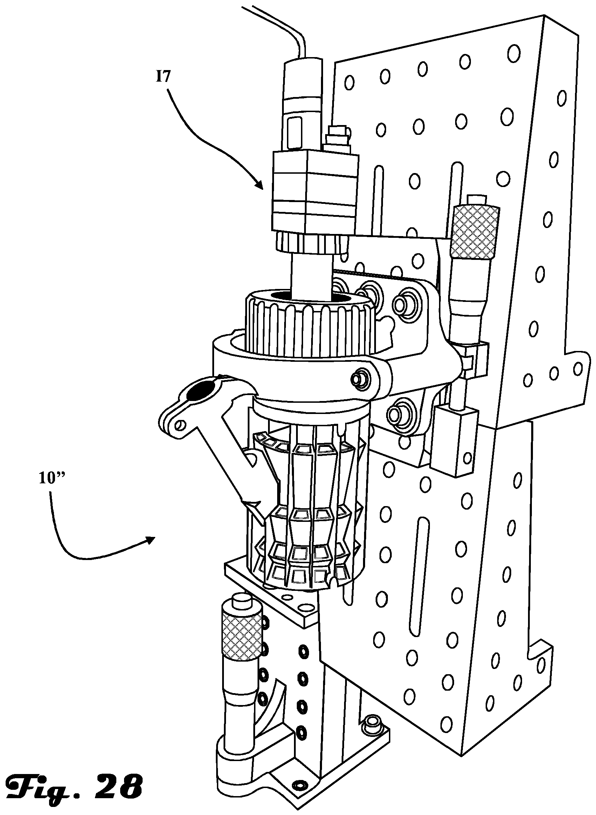

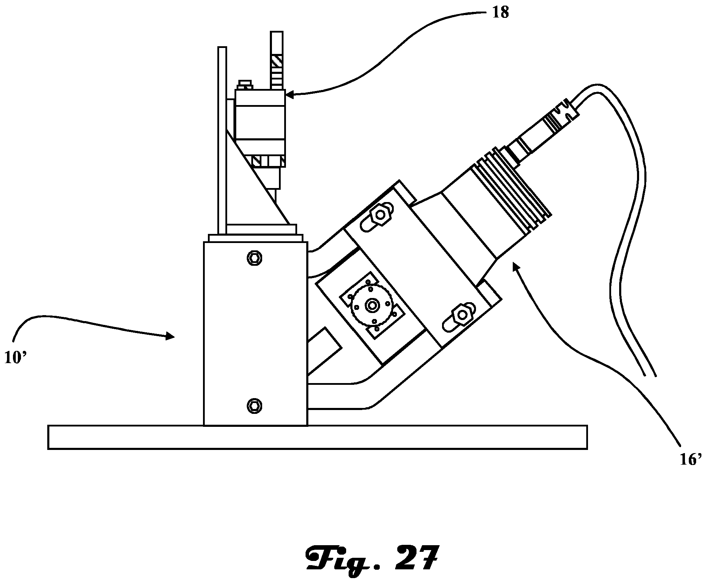

After a solid software foundation was established, improvements were made to the setup. In particular, fixtures were designed and built to minimize possible variation induced between the dot pattern projector and the camera. The test assembly 10' shown in FIG. 27 was built to house an LED pattern projector 16', while the test assembly 10" in FIG. 28 was built to house a laser dot pattern projector (not shown). The setup in FIG. 28 also used micrometer drives for precise and repeatable adjustment of the distance from the camera 18 and projector assembly to the reference plane RS.

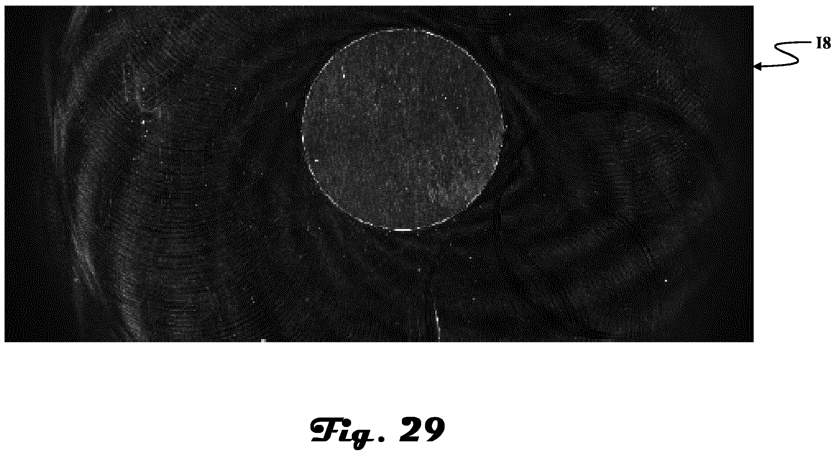

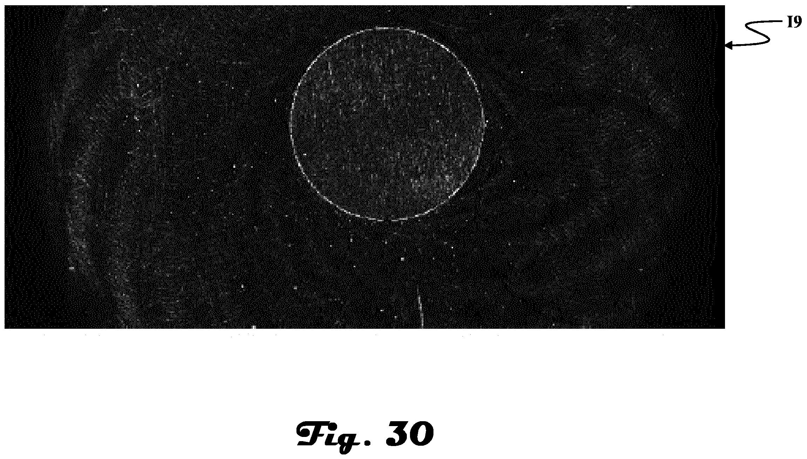

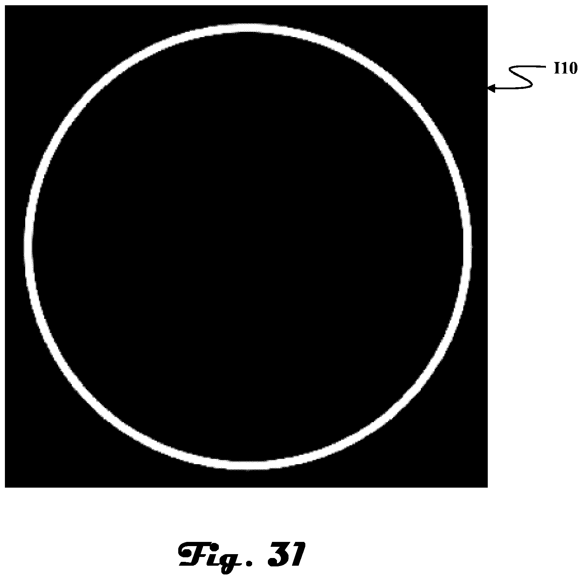

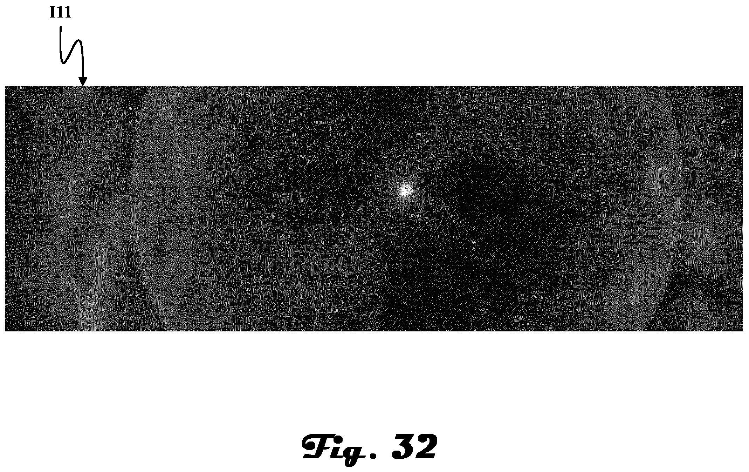

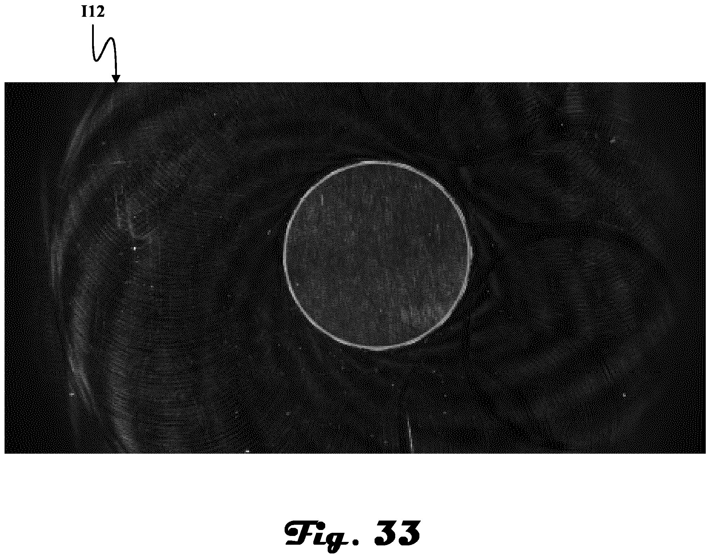

The dot pattern projection measurement method was tested for one target application, fastener head height measurement. A calibrated dot pattern projection instrument was used to take a dot pattern image I8 of a fastener head located in a reference surface (FIG. 29). Subsequently, the fastener location had to be detected within the image space so that dot locations on the fastener head area could be compared against dot locations on the reference surface. This was accomplished using a Sobel operator to increase contrast between the edge of the fastener head from the rest of the image. Then a template image was rastered across the image to produce a correlation image, where pixels are brightest where the correlation between the Sobel image fastener edge is highest. This process is shown in FIGS. 29-33. The original image of a fastener is shown in image I8 of FIG. 29. The result after applying the Sobel operator is shown in image I9 of FIG. 30. The template used to match against the fastener edge is shown in image I10 FIG. 31. The correlation image with highest correlation at pixel locations where correlation is highest is shown in image I11 in FIG. 32. And the final result is shown in image I12 of FIG. 33.

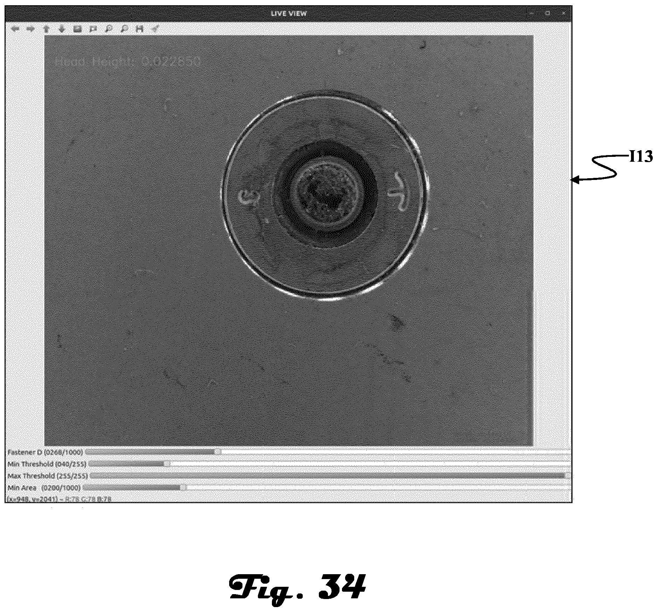

Once the fastener has been identified within the image space, dot measurements outside of the fastener region were used in a least squares plane fitting process to find the reference surface height. While there is a wide variety of standards for head height tolerancing, the approach used for testing was to do another least squares plane fitting process to find the average height of the fastener head area. The result measurement is obtained by subtracting the derived fastener plane height from the reference plane height. This is shown in image I13 of FIG. 34.

As described above, various aspects of this disclosure pertain to computer devices and corresponding computer-implemented processes. Where this disclosure describes a computer device, it is to be understood that the computer device may comprise a special purpose computer including a variety of computer hardware, as described in greater detail herein. For purposes of illustration, programs and other executable program components may be shown or described as discrete blocks or modules. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. A topographical inspection device comprising:

   a device body;
   a plurality of photometric stereo light elements at spaced apart light source locations, each of the photometric stereo light elements configured for illuminating an inspection region of a surface;
   a dot pattern projector mounted on the device body for projecting a dot pattern onto the inspection region of the surface;
   an camera for capturing images of the inspection region of the surface; and
   a controller configured to control the photometric stereo light elements and the camera for making a first topographical measurement of the inspection region and to control the dot pattern projector and the camera for making a second topographical measurement of the inspection region.

2. The topographical inspection device of claim 1, wherein the topographical inspection device is configured for making the first and second topographical measurements without compressing a conforming element onto the inspection region; and/or

   wherein the controller is configured to use the second topographical measurement to correct wave form distortion in the first topographical measurement; and/or
   wherein the controller is configured to make the second topographical measurement by conducting a dot pattern projection routine in which the controller directs the dot pattern projector to project a dot pattern onto the inspection region, directs the camera to capture an image of the dot pattern projected on the inspection region, determine inspection region dot locations in the captured image, and determine surface heights at each of the inspection region dot locations based on the inspection region dot locations.

3. The topographical inspection device of claim 1 or 2, wherein each of the images captured by the camera includes a plurality of pixels and each of the pixels has a respective pixel location along the inspection region, wherein the controller is configured to make the first topographical measurement by calculating a surface normal vector for each pixel location based solely on light intensity in pixels of the images at the respective pixel location.

4. The topographical inspection device of claim 3, wherein before calculating the surface normal vector for each pixel location, the controller is configured to determine a response surface for each pixel location notionally representing intensity of light reflected at the respective pixel location in relation to light source location.

5. The topographical inspection device of claim 4, wherein the controller is further configured to determine a response surface maximum for each response surface, the response surface maximum notionally representing the light source location where the intensity of light reflected by the inspection region at the respective pixel location is greatest; and

wherein the controller is optionally configured to determine the response surface for each pixel location by:

conducting a photometric stereo routine in which the controller sequentially directs each of the photometric stereo light elements to individually illuminate the inspection region from the respective light source location and directs the camera to capture images of the inspection region illuminated by each of the photometric stereo light elements from the respective light source location,
determining light intensity for the respective pixel in each image, and fitting the response surface to the determined light intensities for the respective images in relation to the corresponding light source locations;

and
wherein the controller is further optionally configured to calculate the surface normal vector for each pixel location by:

determining a first vector from the pixel location to the camera;
determining a second vector from the pixel location to the respective response surface maximum; and
bisecting the first and second vectors.

6. The topographical inspection device of any preceding claim, wherein the camera has a focal axis and is supported on the device body for the focal axis to be substantially orthogonal to the inspection region; and/or

wherein the dot pattern projector has a projection axis and the dot pattern projector is mounted on the device body for the projection axis to define a skew angle with the surface less than or equal to 45°; and/or
wherein the topographical inspection device is configured to detect discontinuities in the inspection region having a dimensions less than 0.0010".

7. The topographical inspection device of any preceding claim, wherein the device body comprises a light chamber having a distal end portion and a proximal end portion spaced apart along a light chamber axis, the light chamber having an interior and the distal end portion of the light chamber defining a distal opening to the interior of the light chamber, the topographical inspection device configured to be operatively engaged with the surface such that the distal end portion of the light chamber faces the surface and the inspection region of the surface is exposed to the interior of the light chamber through the distal opening;
optionally wherein the light chamber is configured so that the light chamber axis is substantially orthogonal to the inspection region when the topographical inspection device is operatively engaged with the surface.

8. The topographical inspection device of claim 7, wherein the light chamber is configured so that the light chamber axis is substantially orthogonal to the inspection region when the topographical inspection device is operatively engaged with the surface and the photometric stereo light elements are mounted in the interior of the light chamber at circumferentially spaced apart locations about the light chamber axis and at axially spaced apart locations along the light chamber axis;

9. The topographical inspection device of claim 8, wherein each of the photometric stereo light elements is configured to emit light through the distal opening in the distal end portion of the light chamber for illuminating the inspection region;

optionally wherein the light chamber defines a plurality of annular light mounting segments spaced apart along the light chamber axis, each annular light mounting segment mounting a set of the photometric stereo light elements at angularly spaced apart locations about the light chamber axis; and.

further optionally wherein each annular light mounting segment extends at a respective mounting angle with respect to the light chamber axis and wherein the mounting angles of the light mounting surfaces increase toward the proximal end portion the light chamber.

10. The topographical inspection device as set forth in any one of claims 7 to 9, wherein the camera has a focal axis and is mounted on the device body such that the focal axis is parallel to the light chamber axis;

wherein the light chamber optionally includes a dot pattern projection opening extending radially through the light chamber; and.

further optionally wherein the device body further comprises a projector holder extending radially outward from the light chamber, the projector holder configured to hold the dot pattern projector such that the dot pattern projector is configured to project the dot pattern through the dot pattern projection opening and the distal opening onto the inspection region of the surface.

11. A topographical inspection device comprising:

a device body comprising light chamber having a distal end portion and a proximal end portion spaced apart along a light chamber axis, the light chamber having an interior and the distal end portion of the light chamber defining a distal opening to the interior of the light chamber, the light chamber further defining a dot pattern projection opening extending radially through the light chamber at a location spaced apart proximally of the distal end portion, the device body further comprising a projector holder extending radially outward from the light chamber, a plurality of photometric stereo light elements mounted in the interior of the light chamber at spaced apart light source locations, each of the photometric stereo light elements configured for emitting light through the distal opening for illuminating an inspection region of a surface exposed through the distal opening;

a dot pattern projector mounted on the projector holder for projecting a dot pattern through the distal opening onto the inspection region of the surface;

an camera supported on the device body for capturing images of the inspection region of the surface exposed through the distal opening; and

a controller configured to control the photometric stereo light elements, the dot pattern projector, and the camera for making one or more topographical measurements of the inspection region.

12. A topographical inspection device comprising:

a device body;

a plurality of photometric stereo light elements at spaced apart light source locations along the device body, each of the photometric stereo light elements configured for illuminating an inspection region of a surface;

a camera for capturing images of the inspection region of the surface, each of the images including a plurality of pixels and each of the pixels having a respective pixel location along the inspection region; and

a controller configured to control the photometric stereo light elements and the camera to make a topographical measurement of the inspection region by calculating a surface normal vector for each pixel location based solely on light intensity in pixels of the images at the respective pixel location.

13. The topographical inspection device of claim 12, wherein before calculating the surface normal vector for each pixel location, the controller is configured to determine a response surface for each pixel location notionally representing intensity of light reflected at the respective pixel location in relation to light source location;

optionally wherein the controller is further configured to determine a response surface maximum for each response surface, the response surface maximum indicating the notional light source location where the intensity of light reflected by the inspection region at the respective pixel location is greatest.

14. The topographical inspection device of claim 13, wherein the controller is configured to determine a response surface maximum for each response surface, the response surface maximum indicating the notional light source location where the intensity of light reflected by the inspection region at the respective pixel location is greatest. And the controller is configured to determine the response surface for each pixel location by:

conducting a photometric stereo routine in which the controller sequentially directs each of the photometric stereo light elements to individually illuminate the inspection region from the respective light source location and directs the camera to capture images of the inspection region individually illuminated by each of the photometric stereo light elements from the respective light source location,

determining light intensity for the respective pixel in each image, and

fitting the response surface to the determined light intensities for the respective images in relation to the corresponding light source locations;

optionally wherein the controller is configured to calculate the surface normal vector for each pixel location by:

determining a first vector from the pixel location to the camera;

determining a second vector from the pixel location to the notional light source location of the response surface maximum; and

bisecting the first and second vectors.

15. A computer-implemented method of determining a topography of an inspection region of a surface, the method comprising:

sequentially illuminating the inspection region using individual photometric stereo light elements at spaced apart light source locations;

capturing an image of the inspection region as individually illuminated by each of the photometric stereo light elements and such that pixels of each of the images are at stationary pixel locations of the inspection region;

for each stationary pixel location, determining light intensity of the respective pixel in each of the images;

for each stationary pixel location, fitting a response surface to the determined light intensities so that the response surface notionally represents light intensity in relation to light source location;

for each pixel location, determining a response surface maximum for the respective response surface;

for each pixel location, calculating a surface normal vector based on the respective response surface maximum; and

constructing a pixel-location-by-pixel-location surface topography measurement based on the surface normal vector for each pixel location.

Fig. 1

Fig. 2

EP 4 517 256 A1

**Fig. 3**

Sequentially illuminate each light element. — 41

Capture images of inspection region illuminated by each light element — 42

Determine light intensity value in each image for pixel at pixel location — 44

Determine notional response surface based on determined light intensity values at pixel location — 45

Conduct subroutine independently for each pixel location — 43

Determine notional light source location of response surface maximum for pixel location — 46

Determine surface normal vector for pixel location — 47

40

Construct pixel-location-by-pixel-location surface topography measurement based on the surface normal vector for each pixel locatio — 48

*Fig. 4*

EP 4 517 256 A1

Project dot pattern onto inspection region — 51

Capture images of dot pattern on inspection region — 52

Determine inspection region dot locations — 53

Interpolate surface topographical point locations of inspection region at each dot location

50

*Fig. 5*

**Fig. 6**

EP 4 517 256 A1

Fig. 7

BGA

Fig. 8

Fig. 9

IM

px1 px2 px3 ...

Image 1

Image 2

Image 3

...

*Fig. 10*

*Fig. 11*

EP 4 517 256 A1

*Fig. 12*

**Fig. 13**

**Fig. 14**

EP 4 517 256 A1

*Fig. 15*

EP 4 517 256 A1

Fig. 16

**Fig. 17**

*Fig. 18A*

*Fig. 18B*

*Fig. 18C*

*Fig. 20*

*Fig. 19*

I3

*Fig. 22*

16

Projector

RS

IMAGE TOP

18

Camera

*Fig. 21*

*Fig. 23*

*Fig. 24*

**Fig. 25**

*Fig. 26*

I7

10"

*Fig. 28*

**Fig. 27**

Fig. 29

*Fig. 30*

Fig. 31

Fig. 32

*Fig. 33*

*Fig. 34*

Europäisches
Patentamt

European
Patent Office

Office européen
des brevets

# EUROPEAN SEARCH REPORT

**Application Number**

EP 24 19 7740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/059924 A1 (GELSIGHT INC [US]) 13 April 2023 (2023-04-13) | 1-3,6-12 | INV. G01B11/25 |
| A | * figures * <br> * claims * <br> * paragraphs [0038] - [0112] * | 4,5, 13-15 | |
| A | US 2014/376003 A1 (KERÄNEN HEIMO [FI] ET AL) 25 December 2014 (2014-12-25) * figures * * claims * * paragraphs [0056] - [0104] * | 1-15 | |
| A | US 2015/355101 A1 (SUN ZHUOLI [JP]) 10 December 2015 (2015-12-10) * figures * * claims * * paragraphs [0064] - [0201] * | 1-15 | |

**TECHNICAL FIELDS SEARCHED (IPC)**

G01B

The present search report has been drawn up for all claims

| Place of search | Date of completion of the search | Examiner |
|---|---|---|
| The Hague | 10 January 2025 | Moulara, Guilhem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 517 256 A1**

## ANNEX TO THE EUROPEAN SEARCH REPORT
## ON EUROPEAN PATENT APPLICATION NO.

EP 24 19 7740

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| WO 2023059924 A1 | 13-04-2023 | CA 3234459 A1 | 13-04-2023 |
| | | CN 118369550 A | 19-07-2024 |
| | | EP 4399481 A1 | 17-07-2024 |
| | | JP 2024537199 A | 10-10-2024 |
| | | US 2024247930 A1 | 25-07-2024 |
| | | WO 2023059924 A1 | 13-04-2023 |
| US 2014376003 A1 | 25-12-2014 | CN 104040287 A | 10-09-2014 |
| | | EP 2800946 A1 | 12-11-2014 |
| | | ES 2875052 T3 | 08-11-2021 |
| | | FI 20125014 A | 06-07-2013 |
| | | JP 6291418 B2 | 14-03-2018 |
| | | JP 2015508499 A | 19-03-2015 |
| | | PL 2800946 T3 | 25-10-2021 |
| | | US 2014376003 A1 | 25-12-2014 |
| | | WO 2013102572 A1 | 11-07-2013 |
| US 2015355101 A1 | 10-12-2015 | DE 102015210440 A1 | 17-12-2015 |
| | | JP 6424020 B2 | 14-11-2018 |
| | | JP 2015232483 A | 24-12-2015 |
| | | US 2015355101 A1 | 10-12-2015 |
| | | US 2017186152 A1 | 29-06-2017 |
| | | US 2019056331 A1 | 21-02-2019 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10837916 B